# EUROPEAN PATENT SPECIFICATION

(11) **EP 0 413 827 B1**
(45) Date of publication and mention of the grant of the patent: **03.05.1995**
(21) Application number: 90903923.2
(22) Date of filing: 28.02.1990
(51) Int. Cl.: H04L 29/14, H04L 1/22

(54) **ISDN COMPOSITE SWITCHING SYSTEM**
GEMISCHTES ISDN VERMITTLUNGSSYSTEM
SYSTEME DE COMMUTATION RNIS COMPOSITE

(30) Priority: 01.03.1989 JP 46559/89
(43) Date of publication of application: 27.02.1991
(73) Proprietor: NTT DATA COMMUNICATIONS SYSTEMS CORPORATION, Tokyo 105 (JP)
(72) Inventor: FUNAKI, Kenichi, Minato-ku Tokyo 105 (JP); DOUZONO, Masaaki, Minato-ku Tokyo 105 (JP); KAWAMATA, Kouji, Minato-ku Tokyo 105 (JP); KURUMISAWA, Shinichi, Minato-ku Tokyo 105 (JP); IMAIKE, Shigeru, Minato-ku Tokyo 105 (JP)
(74) Representative: Schmidt-Evers, Jürgen, Dipl.-Ing.
(86) International application number: JP9000260
(87) International publication number: WO9010346

(56) References cited:
- JP-A- 6 239 937
- PATENT ABSTRACTS OF JAPAN, vol. 13, no. 571 (E-862)[3919], 18th December 1989;& JP-A-1 238 234 (HITACHI LTD) 22-09-1989
- DATA COMMUNICATIONS, vol. 18. no. 6, May 1989, pages 81-82,84-86,88-93, New York, US; R. KOENIG: "How to make the PBX-to-ISDN connection"
- DATA COMMUNICATIONS, vol. 15, no. 8, July 1986, pages 56,58,60, New York, US; E.E.M.: "AT&T offers leased-line rerouting as disaster ward, bypass tool"
- NTT REVIEW, vol. 1, no. 2, July 1989, pages 24-34, Tokyo, JP;2O. INOUE: "New INS-net'89 service features, with expanded applications"
- ERICSSON REVIEW, vol. 64, no. B, 1987, pages 11-19, Stockholm, SE; A. RAUSHAGEN et al.: "Business communication in AXE"
- INTERNATIONAL SWITCHING SYMPOSIUM, Phoenix, Arizona, 15th - 20th March 1987, pages 846-849, IEEE, New York, US; E. VÖLZKE: "Private network signalling protocols"
- PATENT ABSTRACTS OF JAPAN, vol. 13, no. 421 (E-822)[3769], 19th September 1989;& JP-A-1 157 634 (FUJITSU LTD) 20-06-1989
- MASAHIRO KATO (author) "ISDN Service for Business, Approaching as an Inexpensive Data Communication Network", Nikkei Electronics, No. 455 of September 5, 1988, p. 165-176, particularly p. 169-170 Nikkei Electronics, Japan, 1985-1990

## Description

### [Technical Field]

The present invention relates to an integrated service digital communication network (ISDN) compound switching system incorporating an integrated service digital communication network compound switching apparatus which backs up an on-line system by selectively switching a private line over to the ISDN line in the event that any failure is present in the private line or in a terminal control unit of the on-line system connected to a host computer at the central controller unit and a plurality of terminal equipment installed in financial organs in remote locations via private communication lines.

### [Background Art]

In order to provide a backup service for any on-line service system to overcome a variety of failures, there is such a conventional system which is preliminarily provided with a backup apparatus of a private line in order that communication can instantly be switched over to the private line whenever failure occurs.

On the other hand, since this conventional system is preliminarily provided with either a private line or a backup apparatus which spends much cost merely for dealing with any potential failure that rarely occurs, this system is by no means economical in terms of running cost.

Furthermore, there is such a conventional system which introduces a plurality of private lines or backup equipment. If any failure occurs in any of these components, the central controller discontinues to operate any of these whichever the lower in the priority so that resources can be redistributed to the operating system having the foremost priority.

Nevertheless, although this conventional system can effectively utilize either the private line or the backup apparatus, when any failure occurs, the system is obliged to discontinue part of business flow. Furthermore, the entire system has a complex structure as another disadvantageous aspect.

Finally, in "ISDN Service for Business, approaching as an inexpensive data communication network", Nikkei Electronics, No. 455, September 5, 1988, pages 165 - 176, Masahiro Kato, an ISDN compound system is disclosed, comprising a central controller unit with a private line interface and an ISDN line interface, a terminal equipment being selectively connected to the respective private-line interface via a privateline and to the ISDN-line interface via an ISDN line. Futhermore, switching means are disclosed for switching connection between the private line and the ISDN line in order to back up the terminal equipment. The switching means connect the terminal equipment to the private line when no fault occurs in the private line and, respectively, connect the terminal equipment to the ISDN-line when a fault is present.

### [Disclosure of Invention]

The invention has been achieved to solve those problems cited above. The object of the invention is to provide a novel integrated service digital communication network ISDN compound switching system which minimizes backup cost, promotes safety, and simplifies switching operation when any failure occurs at a terminal equipment of an on-line service system connecting a central controller unit to a terminal equipment in a remote location via a private line by characteristically selecting one line of the ISDN system before eventually switching either the faulty private line or system containing faulty line or the faulty control system over to a correctly operating communication system.

To achieve the above object, the invention provides a novel ISDN compound switching system comprising the following;
a central controller unit which at least comprises a data processing unit, a communication control unit, a private-line interface, and an ISDN-line interface and governs the center function of an on-line service system;
a terminal equipment which is installed in a remote location from the central controller unit, wherein the terminal equipment is selectively connected to respective the private-line interface via a private line and to the ISDN-line interface via an ISDN line in order to compose the on-line service system in conjunction with the central controller unit;
failure detection means for detecting failure that occurs in the private line or the terminal equipment, wherein the detection means detects failure at least on the part of the central controller unit or the terminal equipment; and
switching means for switching connection between the private line and the ISDN line in order to back up the terminal equipment in accordance with presence or absence of failure detect signal from the failure detection means, wherein the switching means connects said terminal equipment to the private line when the failure detection signal is not present, and wherein the switching means connects the terminal equipment to the ISDN line when the failure detect signal is present.

Furthermore, according to the invention, if any failure arises in the private line connecting the central controller unit to the terminal equipment and then one of those terminal equipment of a business branch office or an ISDN compound switch remote manager (IRM) each sharing the role of checking occurrence of failure ever detects the failure, using channel D of the ISDN system, the ISDN compound switch remote manager IRM provided for the central controller unit transmits a switching data composed of ID codes usable in the form of pass-words and address data usable for a plurality of switches to the ISDN compound switching unit (I-SW) composed of a plurality of switches. After confirming that the ID codes are correct, the ISDN compound switching unit I-SW interchanges those specified switches of the ISDN compound switching unit I-SW of the central controller unit and the terminal equipment in conformity with the specification, and then identifies the calling party before setting channel by applying channel B of the ISDN network via the remote manager IRM and the ISDN compound switching unit I-SW. After identifying the calling party, the channel is provided in order that the backup operation using the ISDN network system can be materialized.

### [Brief Description of Drawings]

Fig. 1 is an overall block diagram of the ISDN compound switching system according to the first embodiment of the invention;
Fig. 2 is a concrete embodiment of the ISDN compound switching system shown in Fig. 1;
Fig. 3 explanatorily designates the normal condition in which communication lines are normally connected to respective terminal equipment and also designates the flow of data in the ISDN system shown in Fig. 1;
Fig. 4 explanatorily designates the backup condition of the line connection system of the ISDN network when the private line is out of order and also designates the flow route of data; and
Fig. 5 designates the second embodiment of the invention in which backup operation is underway via a neighboring business branch office, wherein it also designates the backup connection formed by the ISDN system of the invention to overcome failure generated in a terminal control unit (TC), and in addition, also designates the flow route of data.

### [Best Mode for Carrying Out the Invention]

### (Overall structure of the ISDN system)

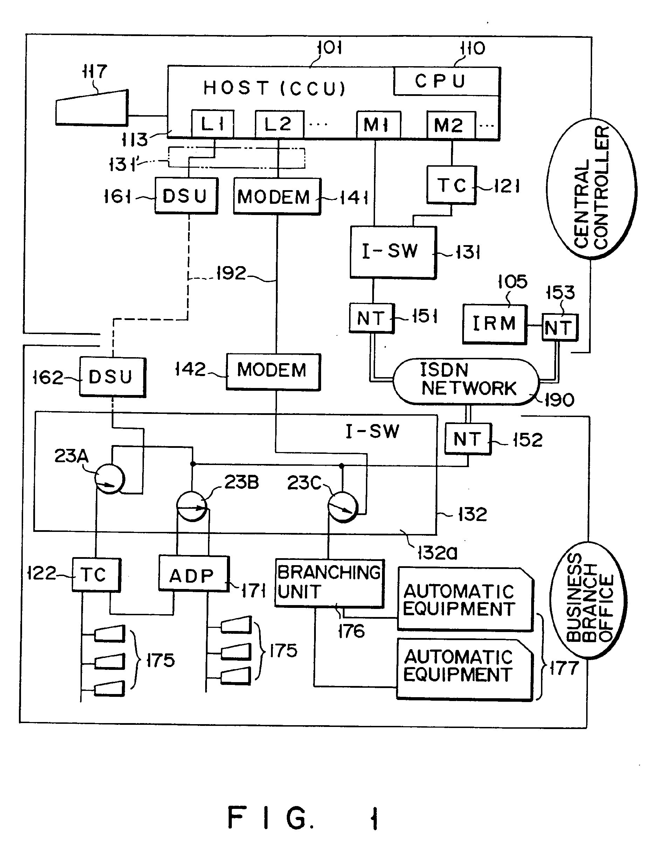

Fig. 1 schematically designates the block diagram of the whole structure of the ISDN system according to the first embodiment of the invention. The ISDN system of the invention is ideally suited for use in a financial on-line service system for example. The invention provides a novel ISDN compound switching system incorporating an ISDN compound switching unit which selectively connects a central data processing unit concentrically processing data to a plurality of terminal equipment installed in a number of business branch offices remote from the central data processing unit via the private communication lines and the backup ISDN lines.

The first embodiment of the invention introduces ISDN service provided in Japan, hereinafter called INS 64. It is assumed that the ISDN system is provided with two of the channel B containing 64 kbps capacity and one of the channel D containing 16 kb/s capacity.

Referring to Fig. 1, the central control unit is composed of a data processing unit 101 which incorporates a central processing unit (CPU) 110 and functions itself as the host computer, a communication control unit (CCU) 113, a terminal control unit (TC) 121, an ISDN compound switching unit (I-SW) 131, an I-SW remote manager (IRM) 105, a pair of network terminal units (NT) 151 and 153, and digital service unit (DSU) 161, and a terminal control unit 117.

Reserve line interfaces M1, M2, ... Mn of the CPU 113 are respectively connected to the I-SW 131 directly or via the terminal control unit (TC) 121, and Yet, these interfaces M1, M2, ... Mn are also connected to an ISDN network 190 via the network terminal unit (NT) 151. The IRM 105 is connected to the ISDN network 190 via the network terminal unit (NT) 153. Private line interfaces L1, L2, ... Ln of the communication control unit CCU 113 are respectively connected to a private line 192 via a digital service unit (DSU) 161 or a modem (MODEM) 141.

The private line 192 is connected to an ISDN compound switching unit I-SW 132 on the part of the terminal equipment of respective business branch offices via the DSU 162 or the MODEM 142. On the other hand, the ISDN network 190 is connected to the ISDN compound switching unit (I-SW) 132 via the network terminal unit (NT) 152. A group of terminal equipment 175 in each business branch office are respectively connected to the I-SW 132 via the terminal control unit (TC) 122 or an adapter (ADP) 171. A branching unit 176 branches a number of automatic cash dispensers (ATR) 177, which are respectively connected to an analogue private line 192 via the ISDN compound switching unit I-SW 132 and the MODEM 142, thus making up an on-line service system in conjunction with the central control unit.

In the event that the communication control unit CCU 113 is not provided with the reserve line interfaces M1, M2, ... Mn, as shown in Fig. 1 with a two-dot chained line, the ISDN compound switching unit I-SW 132 on the part of the central controller unit are interposed between the private line interfaces L1, L2, ... Ln and the digital service unit DSU 161 and the MODEM 141 so that, when one of the private lines 192 is disconnected, the other private line 192 may be connected to the ISDN network 190.

### (Connection and structure of the I-SW)

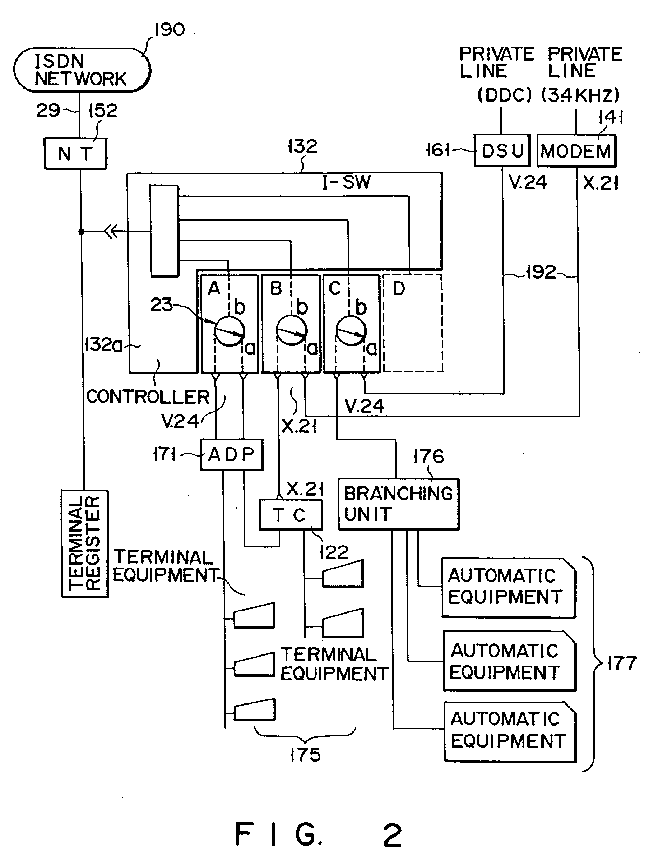

As shown in Fig. 2, the ISDN compound switching unit (I-SW) 132 on the part of the terminal equipment is connected to a bus 29 of the ISDN network 190 via the network terminal unit NT 152. The I-SW 132 is treated as a communication equipment. More particularly, the I-SW 132 is used for independently controlling the two B channels of 64 kb/s, the 2B in INS 64, where control means connection to discrete parties after individually calling them and then disconnects them individually.

Fig. 2 presents a concrete embodiment of the structure of the ISDN compound switching unit and its connection to terminal equipment.

Referring to Fig. 2, switching units 23A through 23D which are respectively connected to a common controller 132a and operated under the command of this controller are formed into a package corresponding to specific interfaces and installed to the body of the ISDN compound switching unit I-SW 132. A maximum of four packages can be installed. However, this is merely an example. Actually, the embodiment does not limit the number merely to four packages but more than four packages can also be installed from technical viewpoint.

By virtue of the introduction of such a switching unit based on package loading, manufacturer can selectively install those packages each containing an interface circuit compatible with the communication standard of the applicable terminal equipment. Also, even when changing terminal equipment, manufacturer can easily replace packages with the suited one.

Those package-loaded format switching units 23A through 23D respectively incorporate mechanical relay switching function, where the package switching units can selectively connect terminal equipment to either of communication lines "a" and "b".

Fig. 2 designates a condition in which the switching units 23A through 23C excluding 23D are respectively connected to a constantly closed contact "a" on the part of the private line 192 via the adapter ADP 171, or the terminal control unit TC 122, or the branching unit 176. By virtue of this arrangement, even though the power is shut off from the ISDN compound switching unit I-SW 132, communication through the private line 192 cannot be discontinued at all.

As mentioned earlier, the ISDN network 190 is connected to the ISDN compound switching unit 132, and thus, each terminal equipment can be connected to a constantly open contact "b" on the part of the ISDN network 190 by turning those switches 23A through 23C.

Each of these switching units 23A through 23D are provided with proper addresses so that any of these switching units 23 corresponding to a specific address can be selected via the communication line "a" or "b". Furthermore, switching condition of these switching units 23A through 23D can be controlled by feeding switching data externally. Switching units 23A through 23D can externally be confirmed via display for example.

In Fig. 2, the switching units 23A and 23C respectively support the communication standard V. 24, whereas the switching 23B supports the communication standard X. 21. Since this embodiment backs up three communication lines, the package corresponding to the switching unit 23D is not loaded. The adapter (ADP) 171 connected to the switching unit 23A is used for the connection to an interface by changing the communication standard into V. 24 in the event that the interface between the terminal control unit (TC) 122 and the terminal equipment 175 cannot directly be connected to the switching unit 23 because of a specific standard different from those communication standards including X. 21, V. 24, and V. 35.

A male type input connector and a female type output connector are provided for the interface cable at the input/output terminals of the ISDN compound switching unit 132. By virtue of this arrangement, even when any unexpected failure occurs in the ISDN compound switching unit 132, the private line can securely be connected by way of bypassing the ISDN compound switching unit 132.

### (Functional operation of the ISDN compound switching unit)

As mentioned earlier, the ISDN compound switching unit is composed of the controller (132a) and those switching units 23A through 23D, where these switching units respectively perform the function of terminal adapters and can additionally be installed according to the number of office service line. The controller 132a and the switching units 23A through 23D respectively incorporate those functions described below.
[1] Function of the controller
   (1) Manual transmission function
      Based on the ISDN subscriber's number, a communication line is connected to the calling party manually input.
   (2) Incoming function
      Channel B is connected on receipt of incoming data from the ISDN network by switching the port specified by the ISDN sub-address from the private line to the ISDN network line.
   (3) Erroneous connection preventive function
      By entering a pass word proper to each user in the originating number informing function or in the caller control message transmitted in response to the calling from the ISDN network, the controller identifies the originating party before allowing the connection of the incoming data line.
   (4) Switch controlling function
      The controller switches the specific port from the private line over to the ISDN network line, in which the port is specified by the "switching instruction" delivered from the ISDN compound switch remote manager IRM based on the operator's instruction or via the channel D based on the operation of the keyboard of the ISDN compound switching unit, or the port is specified by the ISDN sub-address of the caller entry message.
   (5) Remote control connecting function
      The controller connects the channel B to the calling ISDN subscriber's number specified by the "connection instruction" delivered from the remote manager IRM via the channel D. Simultaneously, the controller sets an ISDN sub-address for specifying the port of the ISDN compound switching unit to be connected.
   (6) Remote control restoring function
      In response to the "restoring instruction" delivered from the remote manager IRM via the channel D, the controller releases the channel B from communicating operation and returns the position of the switches.
   (7) Remote-control condition informing function
      In response to the "request for displaying condition" delivered from the remote manager IRM via the channel D, the controller advises the remote manager IRM of those conditions including the use of the channel B, switches and the signal flowing through the private line.
   (8) Private-line-condition monitoring and advising function
      The controller monitors the private line and advises the IRM of any failure if found in the private line.
   (9) Alarming function
      The controller incorporates a line connected to alarm. When alarm is detected, the manager advises it to the IRM.
[2] Function of the switching units
   (1) Function to store switchable interfaces
      The switching units store the existing interfaces including V. 24, V. 35, X. 21, and others subject to switching.
   (2) Switching function
      The switching unit switches the line of the existing interfaces from the main (private) line in the direction of the ISDN network.
   (3) Terminal adapter function
      The switching unit converts the existing interfaces into the ISDN network interfaces.

### (Function of the ISDN compound switch remote manager IRM)

The IRM has multiple functions including the control of the ISDN compound switching unit I-SW, monitoring and displaying the condition of the I-SW using the channel D of the ISDN network.
[1] Function to control the ISDN compound switching unit I-SW
   (1) The IRM instructs the I-SW which one of the switches should be switched.
   (2) The IRM instructs the I-SW to execute connection (calling).
   (3) The IRM instructs the I-SW to release the channel B under use and return the switch position.
   (4) The IRM executes "down-line loading" of office data against respective ISDN compound switching units I-SW.
[2] Monitoring function
   (1) The IRM refers the available condition of the channel B of an optional ISDN compound switch unit I-SW, and conditions of switches and the private line.
[3] Displaying function
   (1) The IRM displays the notice from the I-SW unit informing that the private line is out of order.
   (2) The IRM displays alarm signal from the I-SW unit.

### (Functional operation of the ISDN compound switching system)

### (1) Normal state of connection

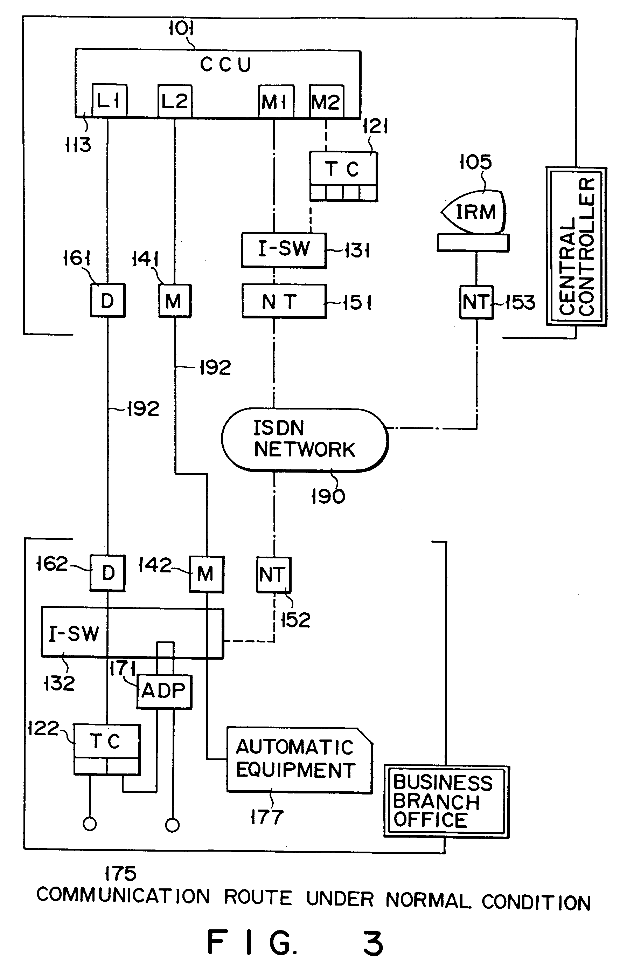

Fig. 3 presents an overall block diagram of normally connected communication lines and data processing equipment between a business branch office and the central controller unit. Equipment in this block diagram are designated by the reference numerals and names identical to those shown in Figures 1 and 2. The reference character M designates the MODEM and D the digital service unit DSU, respectively. Each equipment of the branch office is connected to the central controller unit via the private lines 192 and 192. Data is transmitted and received via the thick lines. Normally, the communication path exhibited as dot-lines and the equipment connected thereto are not used.

### (2) Switching of communication line when the central controller unit detects occurrence of failure

Normally, any failure generated in the private line connected to the terminal control unit TC of any business branch office is detected by the host computer 101 and the remote manager IRM via the ISDN compound switching system 131 on the part of the central controller unit.

In the event that the central controller unit detects failure of the terminal equipment via the ISDN compound switching system, the operator monitoring the remote manager IRM 105 judges whether the failure may last long or can be eliminated in a short period of time. If it is expected that the failure will remain for a long while, the operator then switches the faulty private line over to the ISDN line for executing backup operation.

The concrete method of detecting the disconnection of the private line based on the above technical pre-requisites is described below.

Concretely, those interface cables used for the private line 192 connecting the MODEM to the terminal equipment are globally common with each other, where majority of these cables is based on the "V interface" standard. Normally, any interface cable internally contains 25 cores, and yet, each core has a specific meaning. Disconnection of the private line can be identified by checking the voltage flowing through the conventionally called "CD" line among those 25 cores.

The ISDN compound switching system embodied by the invention constantly monitors the CD line, and if the switching system detects the disconnected private line, the switching system automatically calls the ISDN number of the remote manager IRM preliminarily set in memory table of the ISDN compound switching system. Next, when the ISDN number is connected, the ISDN compound switching system automatically informs the remote manager IRM of the connected ISDN number via a packet of channel D. Since the remote manager IRM constantly awaits arrival of incoming data, on receipt of the ISDN number, the remote manager IRM outputs the ISDN number on a display screen and on a printer. Simultaneously, the remote manager IRM activates alarm buzzer to warn the operator of the presence of failure in the private line. It is operator's discretion whether the ISDN compound switching system should be switched over to the ISDN line, or not.

Next, switching operation in presence of failure is described below.

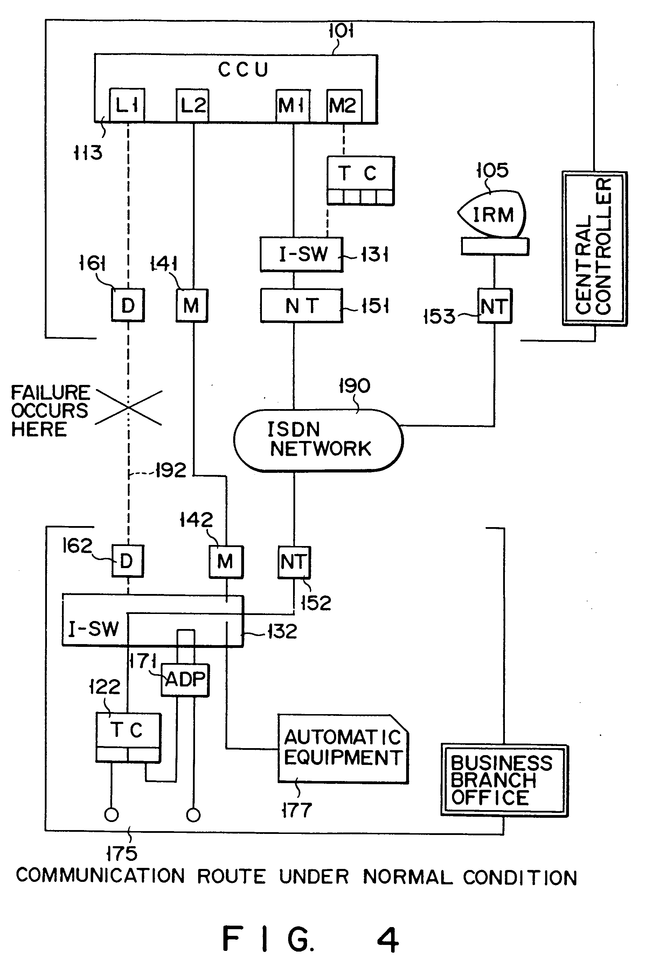

Fig. 4 illustrates the case in which failure is present in the private line 192 which is connected to the interface L1 of the communication control unit CCU 113 on the part of the central controller unit, where the faulty private line is marked with a cross X.

Using the channel D of the ISDN line, the remote manager IRM 105 featuring the above function transmits the switching data to the ISDN compound switching system of the central controller unit and those ISDN compound switching units on the part of respective terminal equipment via user-to-user data communication line or packet of the ISDN network 190. The switching data is composed of an ID code which is used in the network by way of pass-word and address data for setting addresses of the switching units 23A through 23D of the ISDN compound switching unit 132 on the part of terminal equipment.

The ID code can manually be entered or changed in these ISDN compound switching units 131 and 132 by way of setting a dip switch for example. In addition, the ID code can also be changed by causing the remote manager IRM to transmit the ID-code changing data to those ISDN compound switching units 132 in remote locations via the user-to-user data communication line.

The ISDN compound switching unit 131 of the central controller unit and those ISDN compound switching units on the part of respective terminal equipment check the received ID code. According to the example shown in Fig. 4, based on the instruction from the ISDN compound switching units on the part of the terminal equipment, switching units 23A through 23D are respectively switched to enter into standby condition.

Next, in order to establish communication path via the channel B (data channel) of the ISDN network between the central controller unit and respective terminal equipment, the central manager unit needs to call up these terminal equipment. Accordingly, the remote manager IRM transmits a calling instruction data to the ISDN compound switching unit 131 of the central controller unit via the user-to-user data communication line or a packet means, where the calling instruction data consists of the ID code and the terminal-side subscriber's number.

On receipt of the calling instruction from the remote manager IRM 105, if the channel D is available, the ISDN compound switching unit 131 of the central controller unit accesses the specified terminal equipment. Simultaneously, the ISDN compound switching unit 131 of the central controller unit transmits the ID-code provided data to the ISDN compound switching unit 132 on the part of the terminal equipment via the user-to-user data communication line or a packet before identifying the addresses. Then, using the reserve line connected to interface (M1) of the communication control unit 113 of the central controller unit, the ISDN compound switching unit 131 exchanges data between the terminal control unit TC 122 on the part of the business branch office via the data channel (B) of the ISDN network 190.

The interface M1 of the reserve line or the remote manager IRM 105 of the central controller unit monitors whether the ISDN network 190 correctly backs up the faulty system, or not. If the backup operation cannot correctly be performed, the remote manager IRM 105 again outputs instruction to follow up backup connection according to the above sequential steps.

### (3) Manual transmission from the ISDN compound switching unit of a business branch office

Normally, occurrence of failure in the private line connected to the terminal manager TC of any branch office is detected by either the central controller unit or the ISDN compound switching unit of the branch office. To compensate for the failure by the backup operation of the ISDN network 190, the branch office can request the central controller unit party so that switches of the ISDN compound switching units 131 and 132 on both sides can manually be switched over to the ISDN network 190.

In this case, the ISDN compound switching unit 132 of the branch office inputs the subscriber's number of the central controller unit party before depressing the calling button. Simultaneously, the ISDN compound switching unit 132 of the branch office automatically transmits the ID-code provided user-to-user data to the ISDN compound switching unit 131 on the part of the central controller unit party. In response to this, the ISDN compound switching unit 131 of the central controller unit party identifies the ID code of the user-to-user data received from the branch office at the time of calling, and then the switching unit 131 connects itself to the reserve line connected to the interface M1 of the communication control unit 113 to start up exchange of data.

In this case, the interface (M1) of the reserve line on the part of the central controller unit checks to see whether communication is normally executed via the ISDN network 190, or not.

### (4) Backup operation using the ISDN compound switching unit of a neighboring branch office

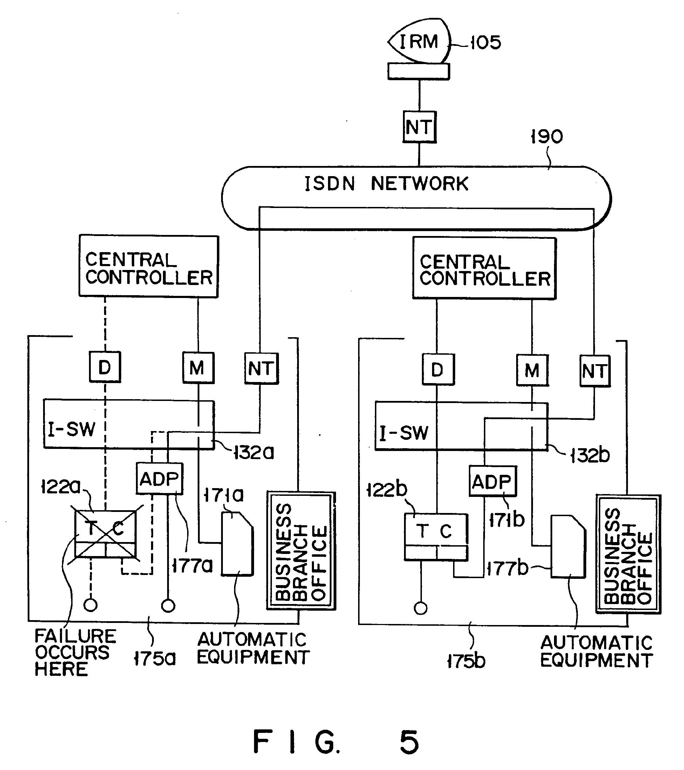

As shown in the second embodiment of Fig. 5, occurrence of failure in the terminal manager (TC) 122a connected to the ISDN compound switching unit 132a of a branch office A and the request for the backup operation with the ISDN compound switching unit 132b of a neighboring branch office B is detected by monitoring operation on the part of the central controller unit and by the request from the branch office A.

Acting on this request, the remote manager IRM 105 transmits switching data to the ISDN compound switching unit 132a of the branch office A and the ISDN compound switching unit 132b of the neighboring branch office B, and then, any of those switching units 23A through 23D (see Fig. 2) specified by these ISDN compound switching units 132a and 132b switches the private line over to the ISDN line. Next, the remote manager IRM 105 outputs a calling instruction to the ISDN compound switching unit 132a of the branch office A. In response to the calling instruction from the remote manager IRM 105, the ISDN compound switching unit 132a of the branch office A calls up the ISDN compound switching unit 132b of the neighboring branch office B. The terminal equipment 175a connected to any of those switching units 23A through 23D specified by the ISDN compound switching unit 132a of the branch office A is connected to the terminal manager TC 122b via any of those switching units 23A through 23D of the ISDN compound switching unit 132b of the neighboring branch office B before starting to exchange data with the central manager unit.

As is clear from those embodiments described above, the ISDN compound switching system according to the invention securely executes backup operations to overcome failure by applying switching units which selectively switch troubled private line over to the ISDN line. As a result, unlike any conventional fixed private line, the ISDN compound switching system can be connected to normal communication system via the ISDN line only when any failure occurs in the communication facilities, thus providing cost economy. The ISDN compound switching system of the invention provides highly flexible backup function even if the communication system were composed of a variety of terminal equipment having different functions and different kinds of private lines in connection with each other.

Concretely, the invention provides a plurality of interface circuits compatible with a variety of communication standards for connecting lines of terminal equipment. By virtue of these interfaces, backup operation can easily be materialized against terminal equipment incorporating different interfaces merely by switching private lines over to the ISDN line.

Furthermore, according to the invention, merely by introducing an ISDN line, backup function can be applied to a plurality of communication lines, and yet, backup operation can easily be executed against those equipment having diversified functions.

According to the ISDN compound switching system of the invention, detection of failure and selection of switchable communication lines are totally executed under the control operations of the central controller unit. This in turn lessens operative burden on the part of business offices, and yet, backup operation can be implemented very quickly.

Since the ISDN compound switching system of the invention uses the channel D of the ISDN network solely for instructing control operations, even when both of the two B channels of 64 kb/s are simultaneously used, independent of this, the ISDN compound switching system and the remote manager IRM can control communication of the entire on-line service system via the channel D. This makes up one of the most important features of the invention.

Recently, although there is such a communication system which switches the private lines by applying INS 64, this is merely based on the B-channel control format. In other words, one of the two B channels of 64 kb/s, the 2B, is used for executing communication, whereas the other is merely used for delivering control instructions. This conventional system can merely use one of the two B channels of 64 kb/s. In contrast with this, the ISDN compound switching system of the invention allows both of the two B channels of 64 kb/s solely for executing communication. In consequence, the invention offers an extremely significant costwise advantage.

Furthermore, when activating the ISDN compound switching system of the invention for the backup of normal communication against any failure occurred in normal private lines, as is clear from the above embodiment, first, an interface cable from the MODEM of the private line is connected to the entrance of the ISDN compound switching system. Then, the interface cable extends itself through the interior and goes out of the ISDN compound switching system before eventually being connected to the terminal equipment. By effectively utilizing the state of passing through the interior of the ISDN compound switching system of the invention, there is a room for promoting technical potentials. For example, the passage of the interface cable through the ISDN compound switching system is effective for detecting the restoration from the disconnected condition of the private line. This can be executed in the same way as the detection of the disconnected private line.

Therefore, according to the invention, when operating an on-line service system connecting the central controller unit to a number of terminal equipment in remote locations via private lines, if any failure occurs in any of these private lines, the ISDN compound switching system switches either the faulty private line or the faulty terminal equipment including control units over to a normally operating line or equipment merely by selecting an ISDN network line.

Thus, the invention provides a highly effective ISDN compound switching system incorporating the ISDN compound switching unit which minimizes cost for implementing backup service against faulty line or equipment, and yet, it promotes safety of communication, and simplifies the line-switching operation in presence of failure.

### [Industrial Applicability]

The ISDN compound switching system according to the invention can effectively be utilized for such an on-line service system connecting the central controller unit to a number of terminal equipment in remote locations by private lines. For example, the system is effectively applicable to any kind of communication systems that can be operated by switching private lines over to the ISDN line as required in order to back up normal communication using an ISDN line whenever failure occurs in the private lines or in terminal equipment.

## Claims

1. An ISDN compound switching system comprising:
a central controller unit (101) which at least comprises a data processing unit (101), a communication control unit (113), a private-line interface (L1, L2) and an ISDN-line interface (M1, M2), and which governs the center function of an on-line service system;
a terminal equipment including a plurality of terminal apparatuses and being installed in a remote location from said central controller unit (101), wherein said terminal equipment (175) is selectively connected to respective said private-line interface (L1, L2) via a private line (192) and to said ISDN-line interface (M1, M2) via an ISDN-line in order to compose said on-line service system in conjunction with said central controller unit (101);
failure detection means for detecting failure that occurs in one of said private lines (192) and said terminal equipment (175), wherein said detection means detect failure at least on one of the part of said central controller unit (101) and said terminal equipment (175); and
switching means (132) for switching connection between said private line (192) and said ISDN-line in order to back up said terminal equipment (175) in accordance with presence/absence of a failure detection signal from said failure detection means, wherein said switching means (132) connect said terminal equipment (175) to said private line (192) when said failure detection signal is absent and connect said terminal equipment (175) to said ISDN-line when said failure detection signal is present, said switching means (132) being composed of a switch controller section (132a), a plurality of switching units (23A, 23B, 23C, 23D) to be selected under control of said switching controller section (132a) and a terminal adapter (171) which converts interface circuits compatible with existing communication standards and existing communication standards into communication standards of an ISDN-network (190), and said plurality of switching units (23A, 23B, 23C, 23D) respectively incorporating a function of circuit-changing switch and selecting any of said plurality of switching units (23A, 23B, 23C, 23D) based on switching data so that either said private line (192) or said ISDN-line can be connected to a corresponding terminal equipment via switching operation, **characterized in that**
said system further comprises remote monitoring means (105) which monitor said failure detection signal of said failure detection means and transmit said switching data to said central controller unit (101) and said terminal equipment (175);
said remote monitoring means (105) output an ID-code for a password as said switching data and address data for said plurality of switching units (23A, 23B, 23C, 23D);
said switching means (132) check said ID-code of said remote monitoring means (105), wherein if the result of checking proves that said ID-code is correct said switching means (132) select any of said plurality of switching units (23A, 23B, 23C, 23D) based on said address data for switching the selected switching unit;
after completing the selective switching operation of said switching means, said remote monitoring means (105) output calling instruction data for confirming the receiving party via channel D of said ISDN-network (190); and
after confirming the receiving party via the calling instruction output of said remote monitoring means (105), said switching means (132) establish a communication path via channel B of said ISDN-network (190) to allow said ISDN-line to back up normal operation to overcome failure in said private line (192).

## Patentansprüche

1. ISDN-Verbund-Vermittlungssystem
mit einer zentralen Steuereinheit (101), die wenigstens eine Datenverarbeitungseinheit (101), eine Kommunikations-Steuereinheit (113), ein Privat-Leitungs-Interface (L1, L2) und ein ISDN-Leitungs-lnterface (M1, M2) umfaßt und die die zentrale Funktion eines On-line-Service-Systems steuert.
mit einer Endgeräte-Ausrüstung, die eine Mehrzahl von Endgeräten umfaßt und an einer von der zentralen Steuereinheit (101) entfernten Stelle installiert ist, wobei diese Endgeräte-Ausrüstung (175) selektiv über eine private Leitung mit dem Privat-Leitungs-lnterface (L1, L2) bzw. über eine ISDN-Leitung mit dem ISDN-Leitungs-lnterface (M1, M2) verbunden ist und in Verbindung mit der zentralen Steuereinheit (101) das On-line-Service-System bildet,
mit einer Fehlerdetektoreinrichtung zur Erfassung von Fehlern, die in den privaten Leitungen (192) und/oder der Endgeräte-Ausrüstung (175) auftreten, wobei die Fehlerdetektoreinrichtung zumindest Fehler in einem Teil der zentralen Steuereinheit (101) und der Endgeräte-Ausrüstung (175) detektiert,
sowie mit einer Durchschalteeinrichtung (132) zur Verbindungsdurchschaltung zwischen der privaten Leitung (192) und der ISDN-Leitung, um die Endgeräte-Ausrüstung (175) nach Maßgabe des Vorhandenseins/Fehlens eines Fehlerdetektorsignals aus der Fehlerdetektoreinrichtung zu aktualisieren, wobei die Durchschalteeinrichtung (132) die Endgeräte-Ausrüstung (175) mit der privaten Leitung (192) verbindet, wenn kein Fehlerdetektorsignal vorliegt und die Endgeräte-Ausrüstung (175) mit der ISDN-Leitung verbindet, wenn ein Fehlerdetektorsignal vorhanden ist, wobei die Durchschalteeinrichtung (132) aus einem Durchschalte-Steuerungsteil (132a), einer Mehrzahl von unter dem Steuereinfluß dieses Durchschalte-Steuerungsteil (132A) auswählbaren Durchschalteeinheiten (23A, 23B, 23C, 23C) und einem Endgeräte-Adapter (171) besteht, der mit existierenden Kommunikationsstandards kompatible Interface-Schaltungen und existierende Kommunikationsstandards in Kommunikationsstandards einer ISDN-Netzes (190) konvertiert, und wobei die Mehrzahl von Durchschalteeinheiten (23A, 23B, 23C, 23C) jeweils eine Funktion zur Schaltkreis-Umschaltung und zur Auswahl einer aus der Mehrzahl von Durchschalteeinheiten (23A, 23B, 23C, 23C) auf der Basis von Durchschaltedaten beinhalten, derart daß entweder die private Leitung (192) oder die ISDN-Leitung durch die Durchschalteoperation mit einer entsprechenden Endgeräte-Ausrüstung verbindbar ist,
**dadurch gekennzeichnet,**
daß das System ferner eine Fernüberwachungseinrichtung (105) aufweist, die das Fehlerdetektorsignal der Fehlerdetektoreinrichtung überwacht und die genannten Durchschaltedaten zu der zentralen Steuereinheit (101) und zu der Endgeräte-Ausrüstung (175) überträgt,
daß die Fernüberwachungseinrichtung (105) als Durchschaltedaten für die Mehrzahl von Durchschalteeinheiten (23A, 23B, 23C, 23C) einen Identifizierungskode (ID-Kode) für ein Paßwort ausgibt,
daß die Durchschalteeinrichtung (132) den ID-Kode der Fernüberwachungseinrichtung (105) prüft, wobei dann, wenn das Ergebnis der Prüfung zeigt, daß der ID-Kode korrekt ist, die Durchschalteeinrichtung (132) eine aus der Mehrzahl von Durchschalteeinheiten (23A, 23B, 23C, 23C) auf der Basis der Adressendaten zum Durchschalten der ausgewählten Durchschalteeinheit auswählt,
daß die Fernüberwachungseinrichtung (105) nach Beendigung der selektiven Durchschalteoperation der Durchschalteeinrichtung Rufbefehlsdaten zur Bestätigung des gerufenen Teilnehmers über den D-Kanal des ISDN-Netzes (190) ausgibt,
und daß nach Bestätigung des gerufenen Teilnehmers durch das Rufbefehl-Ausgangssignal der Fernüberwachungseinrichtung (105) die Durchschalteeinrichtung (132) einen Verbindungsweg über den B-Kanal des ISDN-Netzes (190) herstellt und der ISDN-Leitung die Aktualisierung der normalen Funktion ermöglicht, um den Fehler in der privaten Leitung (192) zu bereinigen.

## Revendications

1. Système de commutation composite RNIS comprenant:
un contrôleur central (101) qui comprend au moins une unité (101) de traitement de données, une unité (113) de contrôle de communications, une interface (L1, L2) de lignes privées et une interface de lignes RNIS (M1, M2), et qui gouverne la fonction de centre d'un système à service en direct;
un équipement terminal comprenant une pluralité d'appareils terminaux et étant installé à un endroit éloigné dudit contrôleur central (101), ledit équipement terminal (175) étant connecté sélectivement à ladite interface correspondante (L1, L2) de lignes privées par l'intermédiaire d'une ligne privée (192) et à ladite interface (M1, M2) de lignes RNIS par l'intermédiaire d'une ligne RNIS afin de constituer ledit système à service en direct conjointement avec ledit contrôleur central (101);
un moyen de détection de pannes pour détecter les pannes qui se produisent dans une desdites lignes privées (192) et dans ledit équipement terminal (175), ledit moyen de détection détectant les pannes se produisant sur au moins une partie dudit contrôleur central (101) et dudit équipement terminal (175); et
un moyen de commutation (132) pour effectuer une connexion entre ladite ligne privée (192) et ladite ligne RNIS afin de seconder ledit équipement terminal (175) en fonction de la présence/absence d'un signal de détection de panne en provenance dudit moyen de détection de pannes, ledit moyen de commutation (132) connectant ledit équipement terminal (175) à ladite ligne privée (192) quand ledit signal de détection de panne est absent et connectant ledit équipement terminal (175) à ladite ligne RNSI quand ledit signal de détection de panne est présent, ledit moyen de commutation (132) étant composé d'une section (132a) de contrôleur de commutateur, d'une pluralité d'unités de commutation (23A, 23B, 23C, 23D) devant être sélectionnées sous le contrôle de ladite section (132a) de contrôleur de commutation, et d'un adaptateur terminal (171) qui convertit les circuits d'interfaces compatibles avec des normes de communication existantes et les normes existantes en des normes de communication d'un réseau RNIS (190), et ladite pluralité d'unités de commutation (23A, 23B, 23C, 23D) incorporant, respectivement, une fonction de commutateur de changement de circuit et sélectionnant une unité quelconque de ladite pluralité d'unités de commutation (23A, 23B, 23C, 23D) en se basant sur des données de commutation de telle sorte que, soit ladite ligne privée (192), soit ladite ligne RNIS puisse être connectée à un équipement terminal correspondant par une opération de commutation,
caractérisé en ce que :
ledit système comprend, en outre, un moyen de télésurveillance (105) qui surveille ledit signal de détection de panne dudit moyen de détection de pannes et transmet lesdites données de commutation audit contrôleur central (101) et audit équipment terminal (175);
ledit moyen de télésurveillance (105) émet un code ID pour un mot de passe en tant que données de commutation précitées et données d'adresses destinées à ladite pluralité d'unités de commutation (23A, 23B, 23C, 23D);
ledit moyen de commutation (132) contrôle ledit code ID dudit moyen de télésurveillance et, si le résultat du contrôle prouve que ledit code ID est correct, ledit moyen de commutation (132) sélectionne une unité de commutation quelconque parmi ladite pluralité d'unités de commutation (23A, 23B, 23C, 23D ) en se basant sur lesdites données d'adresses pour commuter ladite unité de commutation sélectionnée;
après achèvement de l'opération de commutation sélective dudit moyen de commutation, ledit moyen de télésurveillance (105) émet des données d'instruction d'appel pour donner une confirmation à la partie réceptrice par l'intermédiaire du canal D dudit réseau RNIS (190); et
après avoir donné une confirmation à ladite partie réceptrice par l'intermédiaire de l'instruction d'appel de sortie dudit moyen de télésurveillance (105), ledit moyen de commutation (132) établit un circuit de communication par l'intermédiaire du canal B dudit réseau RNIS (190) pour permettre à ladite ligne RNIS de seconder l'opération normale de manière à contrecarrer une panne dans ladite ligne privée (192).
